# EUROPEAN PATENT SPECIFICATION

(11) **EP 4 095 994 B1**
(45) Date of publication and mention of the grant of the patent: **29.10.2025**
(21) Application number: 21846656.3
(22) Date of filing: 19.07.2021
(51) Int. Cl.: H01M 50/20, H01M 50/502, H01M 10/48, H01M 50/291, H01M 50/588, H01M 50/593

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 21.07.2020 KR 20200090330
(43) Date of publication of application: 30.11.2022
(73) Proprietor: LG Energy Solution, Ltd., Seoul 07335 (KR)
(72) Inventor: PARK, Jeonghoon, Daejeon 34122 (KR); KIM, Soo Youl, Daejeon 34122 (KR); OH, Younghoo, Daejeon 34122 (KR); YOON, Han Ki, Daejeon 34122 (KR)
(74) Representative: Plasseraud IP
(86) International application number: PCT/KR2021/009283
(87) International publication number: WO 2022/019594

(56) References cited:
- EP-A1- 4 148 893
- JP-A- 2013 105 571
- KR-A- 20130 059 301
- KR-A- 20170 066 896
- KR-A- 20180 097 898
- KR-A- 20180 099 438
- KR-A- 20190 071 454
- US-A1- 2018 287 110
- US-A1- 2019 296 312

## Description

### [TECHNICAL FIELD]

### Cross Citation with Related Application(s)

This application claims the benefit of Korean Patent Application No. 10-2020-0090330 filed on July 21, 2020 with the Korean Intellectual Property Office.

The present disclosure relates to a battery module and a battery pack including the same, and more particularly, to a battery module having a short circuit preventive structure between busbars, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common.

The battery module may include a battery cell stack in which a plurality of battery cells are stacked, a module frame for housing the battery cell stack, and a busbar frame for covering the front and rear surfaces of the battery cell stack.

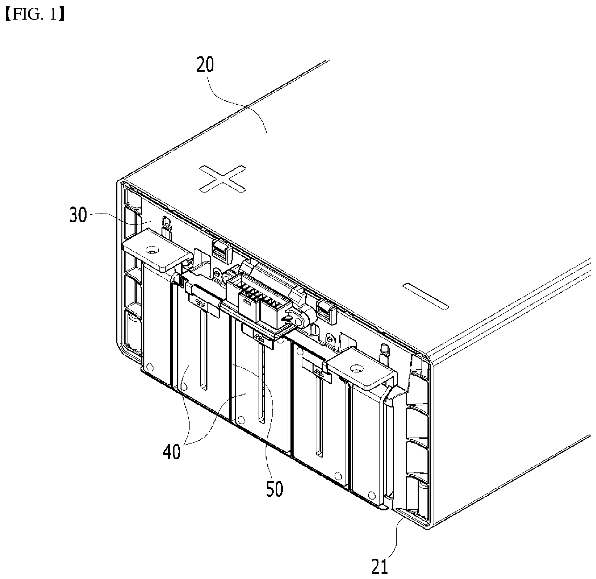

Fig. 1 is a diagram showing a conventional battery module structure.

Referring to Fig. 1, the conventional battery module may include a module frame 20 for housing the battery cell stack, a busbar frame 30 for covering the front and rear surfaces of the battery cell stack, a plurality of busbars 40 attached to the outer side surface of the busbar frame, and a partition wall 50 formed protrusively from the busbar frame 30 to partition the plurality of busbars 40.

At this time, only one partition wall 50 is formed between adjacent busbars 40 among the plurality of busbars, and the interval between the busbars 40 may also be formed to be very narrow. Further, the interval between the module frame bottom part 21 and the busbars 40 may be formed to be very narrow.

Moisture generation phenomenon inside the battery module and electrolyte leakage phenomenon from the battery cell may occur, and these liquids may corrode the busbars and connect deposits between the busbars, which causes a short-circuit phenomenon between busbars. When a short circuit phenomenon occurs, the battery module is more likely to catch fire, which can lead to safety issues. As a result, a busbar and a busbar frame structure capable of preventing a short circuit between busbars in advance are essentially required.

JP2013105571 relative to a battery wiring module and US2019296312 relative to a connection module are known.

### [DETAILED DESCRIPTION OF THE INVENTION]

### [Technical Problem]

It is an object of the present disclosure to provide a battery module having a structure that can prevent a short circuit between busbars, and a battery pack including the same.

The objects of the present disclosure are not limited to the aforementioned objects, and other objects which are not described herein should be clearly understood by those skilled in the art from the following detailed description.

### [Technical Solution]

According to one embodiment of the present disclosure, there is provided a battery module comprising: a battery cell stack in which a plurality of battery cells are stacked; a module frame for housing the battery cell stack; a busbar frame for covering the front and rear surfaces of the battery cell stack; and a plurality of busbars attached to the busbar frame, wherein first and second partition walls are formed between the plurality of busbars.

A first space part is formed between the first and second partition walls.

A second space part is formed between the lower ends of the busbars and the lower surface part of the end plate.

An insulating cover may be located in front of the second space part, and a lower side part of the busbar frame may be located behind the second space part.

The first and second partition walls may cover side surfaces of two busbars facing each other among the plurality of busbars, respectively.

The busbar frame may include horizontal partition walls formed to extend in a horizontal direction so as to make contact with the lower ends of the plurality of busbars.

The battery module may further include a jaw part formed to protrude forward and upward from the horizontal partition wall, wherein the jaw part may fix the lower ends of the plurality of busbars.

The jaw parts may be formed at both side ends of the lower end parts of the plurality of busbars, respectively.

The plurality of busbars may include terminal busbars formed one at each of both ends and a plurality of sensing busbars formed between two terminal busbars, and an interval between the sensing busbars may be wider than an interval between the terminal busbar and the sensing busbar closest thereto.

A height of the first partition wall adjacent to the terminal busbar may be higher than a height of a second partition wall adjacent to the sensing busbar closest to the terminal busbar.

According to another embodiment of the present disclosure, there is provided a battery pack comprising the above-mentioned battery module.

### [ADVANTAGEOUS EFFECTS]

A battery module and a battery pack including the same according to embodiments of the present disclosure can prevent a short circuit between busbars and ensure the stability of the battery module, through the interval securing structure between busbars, the double partition wall structure between busbars, and the interval securing structure between the busbars and the module frame bottom part.

The effects of the present disclosure are not limited to the effects mentioned above and additional other effects not described above will be clearly understood by those skilled in the art.

### [BRIEF DESCRIPTION OF THE DRAWINGS]

Fig. 1 is a diagram showing a conventional battery module structure;
Fig. 2 is an exploded perspective view of a battery module according to one embodiment of the present disclosure;
Fig. 3 is a front view showing a busbar frame and a busbar attached to the battery module according to one embodiment of the present disclosure;
Fig. 4 is a perspective view showing a state in which the busbar frame and the busbar of a battery module according to one embodiment of the present disclosure are attached;
Fig. 5 is a cross-sectional view showing a section A-A of Fig. 3; and
Fig. 6 is an enlarged view of a section B of Fig. 4.

### [DETAILED DESCRIPTION OF THE EMBODIMENTS]

It should be appreciated that the exemplary embodiments, which will be described below, are illustratively described to assist in the understand the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

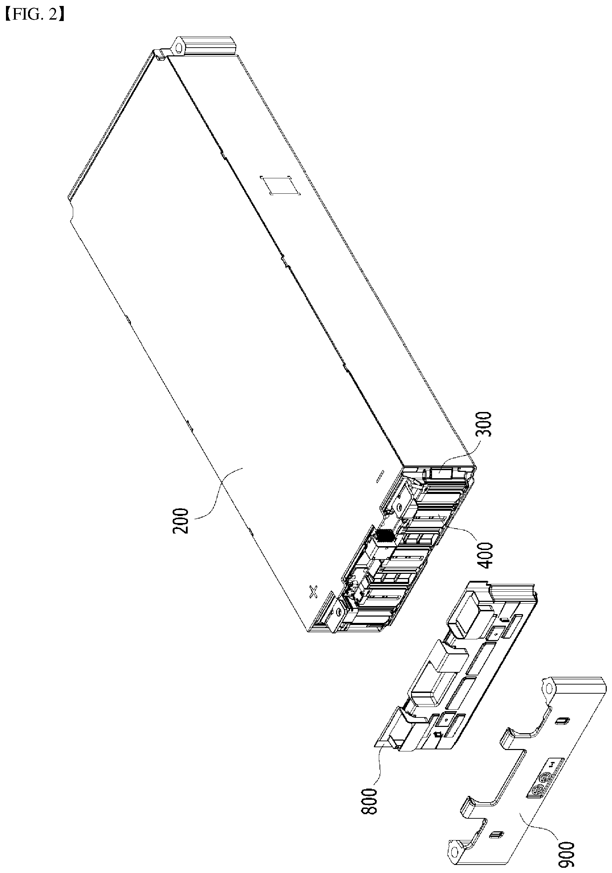

Hereinafter, a battery module according to one embodiment of the present disclosure will be described with reference to Figs. 2 to 4.

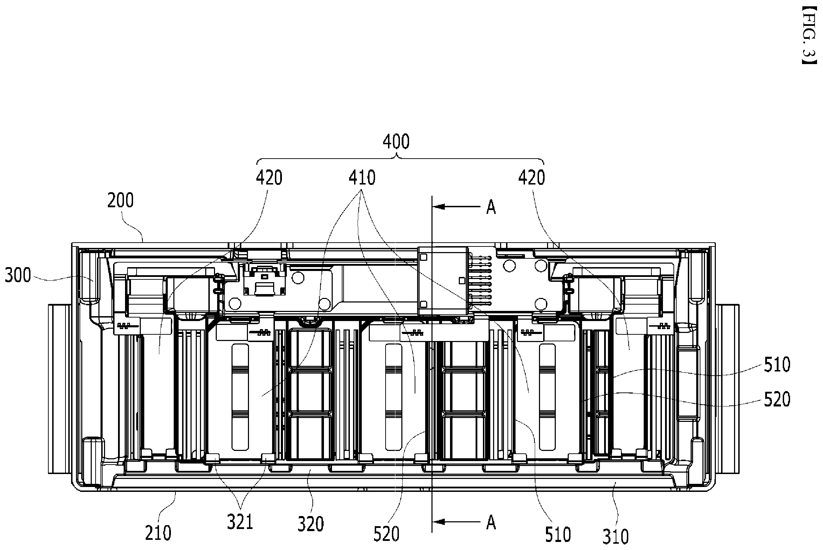

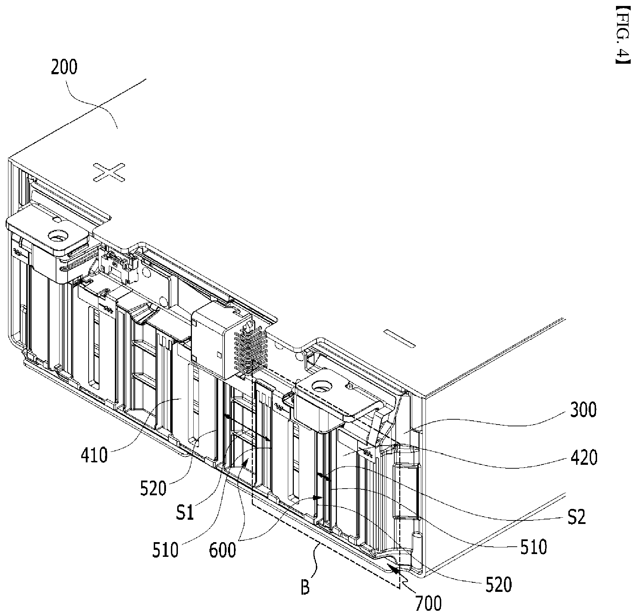

Fig. 2 is an exploded perspective view of a battery module according to one embodiment of the present disclosure. Fig. 3 is a front view showing a busbar frame and a busbar attached to the battery module according to one embodiment of the present disclosure. Fig. 4 is a perspective view showing a state in which the busbar frame and the busbar of a battery module according to one embodiment of the present disclosure are attached.

Referring to Figs. 2 to 4, the battery module according to one embodiment of the present disclosure includes a battery cell stack 100 in which a plurality of battery cells are stacked, a module frame 200 for housing the battery cell stack 100, a busbar frame 300 for covering the front and rear surfaces of the battery cell stack 100, and a plurality of busbars 400 attached to the busbar frame 300.

The battery cell is a secondary battery, and may be configured into a pouch-type secondary battery. Such a battery cell may be composed of a plurality of cells, and the plurality of battery cells may be mutually stacked so as to be electrically connected to each other, thereby forming the battery cell stack 100. Each of the plurality of battery cells may include an electrode assembly, a cell case, and an electrode lead protruding from the electrode assembly.

The module frame 200 houses the battery cell stack 100. The module frame 200 can be formed of upper, lower, left and right surfaces as in the present embodiment, and may be formed in a form in which a U-shaped frame and an upper plate are combined. The module frame 200 may cover the four surfaces of upper, lower, left and right of the battery cell stack 100. The battery cell stack 100 housed inside the module frame 200 can be physically protected through the module frame 200.

A busbar frame 300 is formed so as to cover the front and rear surfaces of the battery cell stack 100, and can be connected with electrode leads formed to protrude from the plurality of battery cells at the front and rear surfaces of the battery cell stack 100. More specifically, electrode leads extended through the busbar frame 400 are coupled to the plurality of busbars 400 attached to the busbar frame, so that the battery cells and the busbars 400 can be electrically connected. A connector 330 may be formed on the upper side of the busbar frame 300. The connector 330 can transmit information sensed from the battery cells to a BMS (Battery Management System) formed on the battery pack.

The end plates 900 are respectively formed on the outside of the busbar frame 300 on the basis of the battery cell stack 100, and can be formed so as to cover the battery cell stack 100 and the busbar frame 300. The end plates 900 can protect the busbar frame 300, the battery cell stack 100, and various electrical equipment connected thereto from external impacts, and at the same time, guide the electrical connection between the battery cell stack 100 and an external power.

An insulating cover 800 may be inserted between the end plate 900 and the busbar frame 300. The insulating cover 800 can cut off the electrical connection between the busbar frame 300 and the outside to ensure the insulation performance of the battery module.

According to the present embodiment, first and second partition walls 510 and 520 may be formed between the plurality of busbars 400, and a first space part 600 may be formed between the first and second partition walls. The first and second partition walls 510 and 520 can cover side surfaces of two busbars facing each other among the plurality of busbars 400, respectively.

Conventionally, there was only one partition wall that partitions each of a plurality of busbars, and the interval between busbar and busbar was also very narrow, so that a short-circuit was highly likely to occur between busbars when forming deposits.

However, according to one embodiment of the present disclosure, a first space part 600 may be formed between the busbars 400, and a first space part 600 may be formed to have constant widths S1 and S2. Thereby, it is possible to secure an interval between the busbars 400, and minimize corrosion of the busbars due to electrolyte and moisture and the occurrence of a short circuit between busbars through connection of deposits.

Further, the first and second partition walls 510 and 520 are formed between the plurality of busbars to form a double partition wall structure between the busbars, whereby it is possible to prevent the possibility of connection between the busbars due to the deposits and thus minimize the occurrence of a short circuit due to the electrical connection between the busbars. Further, the first space part 600 is formed between the first and second partition walls 510 and 520, and the electrolyte or moisture that does not pass through the first and second partition walls 510 and 520 can be first flown into the first space part 600 before making contact with the busbar. Thereby, the storage capacity of the electrolyte or moisture is secured through the first space part 600 and at the same time, the contact between the busbars 400 and the electrolyte or moisture is cut off, and thus, the corrosion phenomenon of the busbars 400 can be fundamentally blocked.

The busbar 400 may include a terminal busbar 420 located one-by-one at both side ends of the busbar frame 300 and a sensing busbar 410 located between the terminal busbars 420. The terminal busbar 420 may connect the battery modules inside the battery pack in series or in parallel to form a current path between the battery modules. The sensing busbar 410 may connect the battery cells inside the battery module in series or in parallel to form a current path between the battery cells.

An additional partition wall 530 may be formed between the sensing busbars 410. An additional partition wall 530 is formed in addition to the first and second partition walls 510 and 520, so that connection between the sensing busbars 410 through the deposits may become more difficult.

Below, a second space part according to one embodiment of the present disclosure will be described with reference to Figs. 3 to 5.

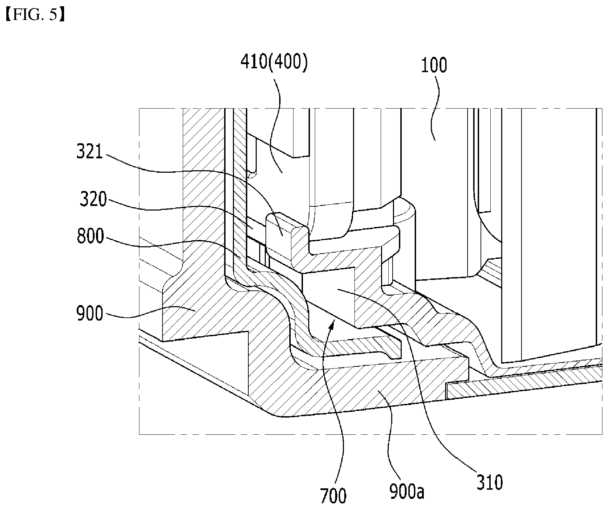

Fig. 5 is a cross-sectional view showing a section A-A of Fig. 3.

Referring to Figs. 3 to 5, in the battery module according to the present embodiment, a second space part 700 may be formed between the lower ends of the busbars 400 and the lower surface part 900a of the end plate 900. More specifically, as shown in Fig. 5, the insulating cover 800 is located in front of the second space part 700, and a lower side part 310 of the busbar frame 300 having a constant height may be located at a rear side thereof.

More specifically, an insulating cover 800 is formed at a front side and a lower side of the second space part 700, a horizontal partition wall 320 may be formed at an upper side of the second space part 700, and a lower side part 310 of the busbar frame may be formed at a rear side thereof. Therefore, the second space part 700 may be defined as a space surrounded by the busbar frame 300 and the insulating cover 800.

Conventionally, there is almost no space between the horizontally arranged busbars and the lower surface of the end plate or the bottom part of the module frame and thus, the electrolyte or moisture leaked from the battery cells is immediately filling up, and the busbars are flooded by the electrolyte or moisture, and corrosion phenomenon of busbars due to the flooding occurred, and deposits due to corrosion connect the busbars, so that a short circuit occurred easily due to the electrical connection between the busbars.

However, according to one embodiment of the present disclosure, the second space part 700 having a sufficient volume is formed between the lower end of the busbars 400 and the lower surface part 900a of the end plate 900, so that the electrolyte or moisture generated inside the battery module may be stored in the second space part 700. The second space part 700 is formed to have a volume capable of housing the electrolyte or moisture, thereby capable of minimizing the possibility that the electrolyte or moisture makes contact with the busbars 400 located on an upper side of the second space part 700. This can minimize the possibility of the busbars being corroded by electrolyte or moisture, and thus the possibility of occurrence of a short circuit caused by the deposits generated by the corrosion phenomenon and connect the busbars can be minimized.

Referring to Fig. 3, the busbar frame 300 may include horizontal partition walls 320 extending in the horizontal direction so as to make contact with the lower ends of the plurality of busbars 400. The horizontal partition wall 320 is formed to protrude between the second space part 700 and the busbars 400, thereby capable of minimizing the possibility that the electrolyte or moisture stored in the second space 700 makes contact with the busbars 400.

According to the present embodiment, the battery module further includes a jaw part 321 formed so as to protrude forward and upward from the horizontal partition wall 320, wherein the jaw part 321 can fix lower ends of the plurality of busbars 400. The jaw parts 321 may be respectively formed at both side ends of the lower end parts of the plurality of busbars 400. The jaw part 321 is formed to protrude more than the horizontal partition wall 320 between the second space part 700 and the busbar 400, thereby capable of further reducing the possibility that the electrolyte or moisture housed under the busbar makes contact with the busbar 400.

Below, a difference in height between partition walls according to one embodiment of the present disclosure will be described with reference to Figs. 3, 4 and 6.

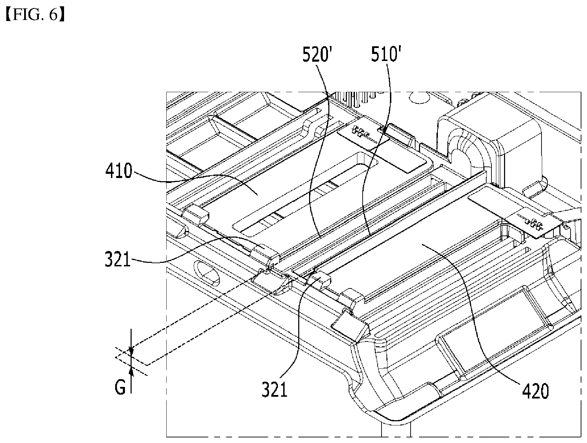

Fig. 6 is an enlarged view of a section B of Fig. 4.

Referring to Fig. 4, the interval S1 between the sensing busbars 410 can be formed to be wider than the interval S2 between a terminal busbar 420 and a sensing busbar 410 closest to the terminal busbar 420. Further, referring to Fig. 6, in the two partition walls 510' and 520' formed between the sensing busbar 410 and the terminal busbar 420, the first partition wall 510' may be formed to be higher than the second partition wall 520'.

Instead of the interval S2 between the sensing busbar 410 and the terminal busbar 420 being narrower than the interval S1 between the sensing busbars 410, the partition wall 510' located adjacent to the terminal busbar 420 is formed to be higher than the second partition wall 520' by the interval G, thereby capable of preventing the connection between the busbars 400 due to the deposits and preventing a short circuit between the busbars.

The above-mentioned battery module can be included in the battery pack. The battery pack may have a structure in which one or more of the battery modules according to the embodiment of the present disclosure are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also falls under the scope of the present disclosure.

Although the invention has been shown and described with reference to the preferred embodiments, the scope of the present disclosure is not limited thereto, and numerous other modifications and embodiments can be devised by those skilled in the art, without departing from the scope of the principles of the invention described in the appended claims.

### [Description of Reference Numerals]

200: module frame
210: lower surface part of module frame
300: busbar frame
310: lower side part of busbar frame
320: horizontal partition wall
321: jaw part
400: plural busbars
410: sensing busbar
420: terminal busbar
510: first partition wall
520: second partition wall
530: additional partition wall
600: first space part
700: second space part
800: insulating cover
900: end plate

## Claims

1. A battery module comprising:
a battery cell stack in which a plurality of battery cells are stacked;
a module frame (200) for housing the battery cell stack;
a busbar frame (300) for covering the front and rear surfaces of the battery cell stack; and
a plurality of busbars (400) attached to the busbar frame (200),
wherein first and second partition walls (510, 520) are formed between the plurality of busbars (400) to form a double partition wall structure between the busbars (400),
wherein a first space part (600) is formed between the first and second partition walls (510, 520),
**characterized in that** it comprises:
end plates (900) respectively formed on an outside of the busbar frame (300) on the basis of the battery cell stack (100), and formed so as to cover the battery cell stack (100) and the busbar frame (300), and wherein a second space part (700) is formed between the lower ends of the busbars and the lower surface part (900a) of the end plate (900).

2. The battery module of claim 1, wherein:
an insulating cover (800) is located in front of the second space part (700), and a lower side part (310) of the busbar frame is located behind the second space part (700).

3. The battery module of claim 1, wherein:
the first and second partition walls (510, 520) cover side surfaces of two busbars adjacent to each other among the plurality of busbars (400), respectively.

4. The battery module of claim 1, wherein:
the busbar frame (300) comprises horizontal partition walls (320) formed to extend in a horizontal direction so as to make contact with the lower ends of the plurality of busbars (400).

5. The battery module of claim 4,
which further comprises a jaw part (321) formed to protrude forward and upward from the horizontal partition wall (320),
wherein the jaw part (321) fixes the lower ends of the plurality of busbars (400).

6. The battery module of claim 5, wherein:
the jaw parts (321) are formed at both side ends of the lower end parts of the plurality of busbars (400), respectively.

7. The battery module of claim 1, wherein:
the plurality of busbars (400) comprises terminal busbars (420) formed one at each of both ends and a plurality of sensing busbars (410) formed between two terminal busbars (420), and
an interval (S1) between the sensing busbars (410) is wider than an interval (S2) between the terminal busbar (420) and the sensing busbar (410) closest thereto.

8. The battery module of claim 7, wherein:
a height of the first partition wall (510) adjacent to the terminal busbar (420) is higher than a height of a second partition wall (520) adjacent to the sensing busbar (410) closest to the terminal busbar (420).

9. A battery pack comprising the battery module of claim 1.

## Patentansprüche

1. Batteriemodul, umfassend:
einen Batteriezellenstapel, in welchem eine Mehrzahl von Batteriezellen gestapelt ist;
einen Modulrahmen (200) zum Aufnehmen des Batteriezellenstapels;
einen Sammelschienenrahmen (300) zum Abdecken der vorderen und hinteren Flächen des Batteriezellenstapels; und
eine Mehrzahl von Sammelschienen (400), welche an dem Sammelschienenrahmen (200) befestigt sind,
wobei erste und zweite Trennwände (510, 520) zwischen der Mehrzahl von Sammelschienen (400) gebildet sind, um eine Doppeltrennwandstruktur zwischen den Sammelschienen (400) zu bilden,
wobei ein erster Raumteil (600) zwischen den ersten und zweiten Trennwänden (510, 520) gebildet ist,
**dadurch gekennzeichnet, dass** es umfasst:
Endplatten (900), welche jeweils an der Basis des Batteriezellenstapels (100) an einer Außenseite des Sammelschienenrahmens (300) gebildet sind und welche derart gebildet sind, dass sie den Batteriezellenstapel (100) und den Sammelschienenrahmen (300) abdecken,
und wobei ein zweiter Raumteil (700) zwischen den unteren Enden der Sammelschienen und dem unteren Flächenteil (900a) der Endplatte (900) gebildet ist.

2. Batteriemodul nach Anspruch 1, wobei:
eine isolierende Abdeckung (800) vor dem zweiten Raumteil (700) angeordnet ist und ein unterer Seitenteil (310) des Sammelschienenrahmens hinter dem zweiten Raumteil (700) angeordnet ist.

3. Batteriemodul nach Anspruch 1, wobei:
die ersten und zweiten Trennwände (510, 520) jeweils Seitenflächen zweier Sammelschienen abdecken, welche unter der Mehrzahl von Sammelschienen (400) benachbart sind.

4. Batteriemodul nach Anspruch 1, wobei:
der Sammelschienenrahmen (300) horizontale Trennwände (320) umfasst, welche gebildet sind, um sich in einer horizontalen Richtung zu erstrecken, um mit den unteren Enden der Mehrzahl von Sammelschienen (400) in Kontakt zu treten.

5. Batteriemodul nach Anspruch 4,
welches ferner einen Klauenteil (321) umfasst, welcher gebildet ist, um von der horizontalen Trennwand (320) nach vorne und nach oben hervorzustehen,
wobei der Klauenteil (321) die unteren Enden der Mehrzahl von Sammelschienen (400) fixiert.

6. Batteriemodul nach Anspruch 5, wobei:
die Klauenteile (321) jeweils an beiden Seitenenden der unteren Endteile der Mehrzahl von Sammelschienen (400) gebildet sind.

7. Batteriemodul nach Anspruch 1, wobei:
die Mehrzahl von Sammelschienen (400) Anschluss-Sammelschienen (420), welche einzeln an jedem von beiden Enden gebildet sind, und eine Mehrzahl von Erfassung-Sammelschienen (410) umfasst, welche zwischen zwei Anschluss-Sammelschienen (420) gebildet sind, und
ein Abstand (S1) zwischen den Erfassung-Sammelschienen (410) breiter als ein Abstand (S2) zwischen der Anschluss-Sammelschiene (420) und der Erfassung-Sammelschiene (410) ist, welche am nächsten dazu sind.

8. Batteriemodul nach Anspruch 7, wobei:
eine Höhe der ersten Trennwand (510), welche benachbart zu der Anschluss-Sammelschiene (420) ist, höher als eine Höhe einer zweiten Trennwand (520) ist, welche benachbart zu der Erfassung-Sammelschiene (410) ist, welche am nächsten zu der Anschluss-Sammelschiene (420) ist.

9. Batteriepack, umfassend das Batteriemodul nach Anspruch 1.

## Revendications

1. Module de batterie comprenant :
un empilement d'éléments de batterie dans lequel une pluralité d'éléments de batterie sont empilés ;
un cadre de module (200) pour contenir l'empilement d'éléments de batterie,
un cadre de barres omnibus (300) pour recouvrir les surfaces avant et arrière de l'empilement d'éléments de batterie ; et
une pluralité de barres omnibus (400) fixées au cadre de barres omnibus (200),
dans lequel des première et seconde parois de séparation (510, 520) sont formées entre la pluralité de barres omnibus (400) pour former une structure de double parois de séparation entre les barres omnibus (400),
dans lequel une première partie d'espace (600) est formée entre les première et seconde parois de séparation (510, 520),
**caractérisé en ce qu'**il comprend :
des plaques d'extrémité (900) formées respectivement sur un extérieur du cadre de barres omnibus (300) sur la base de l'empilement d'éléments de batterie (100), et formées de manière à recouvrir l'empilement d'éléments de batterie (100) et le cadre de barres omnibus (300), et dans lequel une seconde partie d'espace (700) est formée entre les extrémités inférieures des barres omnibus et la partie de surface inférieure (900a) de la plaque d'extrémité (900).

2. Module de batterie selon la revendication 1, dans lequel :
un couvercle isolant (800) est situé devant la seconde partie d'espace (700), et une partie latérale inférieure (310) du cadre de barres omnibus est située derrière la seconde partie d'espace (700).

3. Module de batterie selon la revendication 1, dans lequel :
les première et seconde parois de séparation (510, 520) recouvrent des surfaces latérales de deux barres omnibus adjacentes parmi la pluralité de barres omnibus (400), respectivement.

4. Module de batterie selon la revendication 1, dans lequel :
le cadre de barres omnibus (300) comprend des parois de séparation horizontales (320) formées pour s'étendre dans une direction horizontale de manière à entrer en contact avec les extrémités inférieures de la pluralité de barres omnibus (400).

5. Module de batterie selon la revendication 4,
qui comprend en outre une partie mâchoire (321) formée pour faire saillie vers l'avant et vers le haut à partir de la paroi de séparation horizontale (320),
dans lequel la partie mâchoire (321) fixe les extrémités inférieures de la pluralité de barres omnibus (400).

6. Module de batterie selon la revendication 5, dans lequel : les parties mâchoires (321) sont formées aux deux extrémités latérales des parties d'extrémité inférieures de la pluralité de barres omnibus (400), respectivement.

7. Module de batterie selon la revendication 1, dans lequel :
la pluralité de barres omnibus (400) comprend des barres omnibus de bornes (420) formées une à chacune des deux extrémités et une pluralité de barres omnibus de détection (410) formées entre deux barres omnibus de bornes (420), et
un intervalle (S1) entre les barres omnibus de détection (410) est plus large qu'un intervalle (S2) entre la barre omnibus de borne (420) et la barre omnibus de détection (410) la plus proche de celle-ci.

8. Module de batterie selon la revendication 7, dans lequel :
une hauteur de la première paroi de séparation (510) adjacente à la barre omnibus de borne (420) est supérieure à une hauteur d'une seconde paroi de séparation (520) adjacente à la barre omnibus de détection (410) la plus proche de la barre omnibus de borne (420).

9. Bloc-batterie comprenant le module de batterie selon la revendication 1.
